# EUROPEAN PATENT SPECIFICATION

(11) **EP 4 381 937 B1**
(45) Date of publication and mention of the grant of the patent: **28.05.2025**
(21) Application number: 23212895.9
(22) Date of filing: 29.11.2023
(51) Int. Cl.: A01D 84/00, A01D 89/00

(54) **WINDROW MERGER AND METHOD FOR FORMING WINDROWS THROUGH A WINDROW MERGER WHICH COLLECTS AGRICULTURAL PRODUCTS FROM A FIELD**
SCHWADENZUSAMMENSETZER UND VERFAHREN ZUR BILDUNG VON SCHWADEN DURCH EINEN SCHWADENZUSAMMENSETZER, DER LANDWIRTSCHAFTLICHE PRODUKTE AUS EINEM FELD EINSAMMELT
DISPOSITIF DE FUSION D'ANDAIN ET PROCÉDÉ DE FORMATION D'ANDAINS À TRAVERS UN DISPOSITIF DE FUSION D'ANDAIN COLLECTANT DES PRODUITS AGRICOLES À PARTIR D'UN CHAMP

(30) Priority: 01.12.2022 IT 202200024819
(43) Date of publication of application: 12.06.2024
(73) Proprietor: ROC s.r.l., 47824 Poggio Torriana (RN) (IT)
(72) Inventor: UBALDI, Raffaele, 47922 RIMINI (RN) (IT); UBALDI, Stefano, 47922 RIMINI (RN) (IT)
(74) Representative: Conti, Marco

(56) References cited:
- EP-A1- 2 745 672
- FR-A1- 2 898 243
- US-B2- 7 823 371

## Description

The present invention relates to a windrow merger and a method for forming windrows through a windrow merger which collects agricultural products from a field. A windrow merger is an agricultural machine which collects hay, grass or other agricultural products (derived, for example, from a previous cutting step) and groups them on the ground forming a windrow for drying. Windrow mergers can be self-propelled, with a motor, or pulled by a tractor. In general, the windrow mergers comprise a frame which supports at least one pick up device for picking up agricultural products from a field and at least one device for moving the products collected, the movement device being located in the proximity of the pick up device and moving said products transversely to the latter.

This machine allows to plants lying on the ground to be picked up and to move them sideways in order to place them in a windrow. It is then possible to collect these windrows, for example, by means of a press for bales or a shredder or a self-loading truck. In this context, patent document US7823371B2 describes an example of a windrow merger. The windrow merger according to document US7823371B2 also comprises a guiding device for the products picked up, which is positioned at least partly above and proximal to the pick up device. Moreover, the pick up device is supported by arms which extend behind above the movement device and the rear ends of which are articulated relative to the frame by means of substantially horizontal axes located, during the operation, above the rear portion of the movement device and about which the arms can rotate by a certain angle.

Further Examples of known windrow mergers are disclosed by patent documents EP2745672A1 and FR2898243A1.

Prior art windrow mergers have some disadvantages, however, and can be improved. In effect, there are various needs in this sector.

A requirement is the robustness of the windrow merger; in particular, there is the need to have a solid guiding device, which is not very subject to twisting or to inclining relative to the horizontal plane, during use. Another requirement is that of reducing the risk of having faults or breakages of the guiding device, also when the windrow merger moves quickly on the field and taking into account that the ground on which the windrow merger moves could be uneven. Another need is that the windrow merger is practical to close when it needs to be transported on the road.

The aim of this invention is to provide a windrow merger and a method for forming windrows which overcome the above-mentioned drawbacks of the prior art.

Said aims are fully achieved by the windrow merger and by the method according to the invention, as characterised in the appended claims.

According to an aspect of the invention, the invention provides a windrow merger. The windrow merger is configured for collecting agricultural products from a field. The windrow merger picks up the agricultural products moving in an advancing direction. According to an example, the windrow merger is connectable to a tractor to be moved in the advancing direction. According to another example, the windrow merger can be self-propelled.

The windrow merger comprises a frame. The frame has a crosspiece. The crosspiece is oriented transversely to the advancing direction. The frame may also have a first and a second upright. According to an example, the first and the second upright are fixed to the crosspiece. The first and the second upright are fixed to the crosspiece to protrude upwards.

The windrow merger comprises a pick up device. The pick up device is configured for collecting the agricultural products.

The windrow merger includes a conveyor. The conveyor is connected to the frame. The conveyor is configured to receive the agricultural products from the pick up device. The conveyor is configured for moving the agricultural products in a conveying direction. The conveying direction is oriented horizontally. The conveying direction is transversal to the advancing direction.

The windrow merger includes a guiding device. According to an example, the guiding device is positioned upstream of the pick up device relative to the advancing direction. The windrower is configured for guiding the agricultural products towards the conveyor. The guiding device is movable between a lowered position and a raised position. According to an example, in the lowered position, the guiding device is proximal to the pick up device. According to an example, in the raised position, the guiding device is distal from the pick up device. According to an example, the guiding device acts in conjunction with the pick up device for moving the agricultural products towards the conveyor.

The windrow merger includes a support structure. The support structure is configured to support the guiding device. The support structure is configured to support the guiding device in a movable fashion. According to an example, the support structure includes a first arm and a second arm. Each of the first and second arms has a first end and a second end. According to an example, the first end is connected to the guiding device. According to an example, the second end is articulated to the frame. The second end is articulated to the frame in such a way that the support structure rotates relative to the frame. The support structure rotates about an axis of oscillation. The axis of oscillation is parallel to the conveying direction.

The windrow merger includes an actuating structure. The actuating structure includes a rod. The rod extends parallel to the conveying direction. The rod extends between a first end and a second end. The rod is connected to the first and second upright. The rod is connected rotatably to the first and to the second upright. The rod is connected rotatably to the first and to the second upright at the first and second ends, respectively. The rod is configured to rotate along an axis of rotation. The axis of rotation is parallel to the axis of oscillation. According to an example, the axis of rotation is positioned at a height greater than the axis of oscillation. According to another example, the axis of rotation may be located at the same height as the axis of oscillation.

According to an example, the actuating structure includes a first and a second bar. The first and second bars are connected to the first and second arms, respectively. Each of said first and second bars is connected to the respective arm at an actuating point. According to an example, the actuation point is located between the first end and the second end of the arm. Each of said first and second bars is connected to the rod. Each of said first and second bars is connected to the rod, so that a rotation of the rod about the axis of rotation is kinematically linked to a rotation of the support structure about the axis of oscillation, by means of the first and the second bar. It should be noted that the bar may be any connecting element. The bar may be a rigid element, or it might be a tie rod, such as, for example, a rope or a cable.

The actuating structure may also include an actuator. The actuator is connected to the frame. The actuator is connected to the rod. The actuator is connected to the rod so that a position of the actuator is kinematically linked to the angular position of the rod about the axis of rotation.

For this reason, according to an aspect of this invention, the rod is connected to the support structure by means of the bars and, therefore, a rotation of the support structure about the axis of oscillation leads to a rotation of the rod about the axis of rotation, and vice versa; moreover, the actuator is connected to the rod, therefore, every movement of the guiding device and, consequently, the rotation of the support structure about the axis of oscillation, leads to a change in the position of the actuator and vice versa. This solution makes it possible to obtain a windrow merger wherein the arms of the support structure and the guiding device move in a particularly precise and stable manner, so it is possible to prevent oscillations and increase the robustness of the structure.

According to an example, the actuating structure comprises a first linking element and a second linking element. The first linking element and the second linking element include a first portion and a second portion.

According to an example, the first portion is fixed to the rod. According to an example, the second portion is articulated, respectively, to the first and to the second bar. The second portion is radially spaced from the axis of rotation.

For this reason, according to an aspect of this invention, each rotation of the rod about the axis of rotation leads to the rotation of the support structure about the axis of oscillation, by means of the bars which are connected to the rod by means of the linking elements. In other words, each movement of the rod about the axis of rotation is transferred to the bars and therefore to the arms by means of the linking elements and each movement of the arms is transferred to the rod by means of the linking elements.

According to an example, the first linking element also comprises a third portion. The third portion is articulated to the actuator. The third portion is radially spaced from the axis of rotation.

For this reason, the position of the actuator is kinematically linked to the angular position of the rod about the axis of rotation by means of the third portion of the linking element.

According to an example embodiment, the third portion is angularly spaced from the second portion. The third portion is angularly spaced from the second portion by a predetermined angle. The predetermined angle is greater than zero. For this reason, the connection point of the actuator to the rod is different from the second portion of the linking element. This solution makes it possible to obtain an actuating structure with greater efficiency. In effect, this configuration makes it possible to have a favourable point on the linking element, between the second and the third portion, during the rotation of the rod and of the support structure. According to an example, the actuator comprises a single piston-cylinder system. According to an example, the piston-cylinder system is located at the first end of the rod. In particular, the piston-cylinder system is connected to the rod at the third portion of the linking element. For this reason, according to an aspect of this invention, only one end of the rod is connected to the actuator; moreover, the first and the second arm of the support structure are connected to each other by the rod, so, in this configuration, a change of position of the actuator leads to a rotation of the rod about the axis of rotation; this rotary movement of the rod causes a rotation of the first arm about the axis of oscillation, by means of the first bar; moreover, at the same time, the second arm is oscillated about the axis of oscillation, because the movement of the first arm is transmitted to the second arm by the rod. Moreover, by positioning the actuator only on one end of the rod it is possible to provide more space on the windrow merger; this is a useful for example when the windrow merger must be closed for being transported. According to an example the actuator is a hydraulic system. The hydraulic system comprises a cylinder. The cylinder is oriented in a longitudinal direction.

The hydraulic system also comprises a piston. The piston is positioned inside the cylinder. The piston defines inside the cylinder a first chamber and a second chamber. The first and the second chamber are filled with oil under pressure. The first and the second chamber are in fluid communication. The first and the second chamber are in fluid communication in such a way that the oil can move between the first and the second chamber. In particular, the oil moves between the first and the second chamber in response to a movement of the piston inside the cylinder.

The hydraulic system comprises a rod. The rod is movable in the cylinder for kinematically linking said position of the actuator to the angular position of the rod about the axis of rotation. The rod is connected to the piston. According to an example, the rod has a first portion and a second position. According to an example, the first portion of the rod is positioned partly in the first chamber and partly outside the cylinder. According to an example, the second portion of the rod is positioned partly in the second chamber.

The hydraulic system also comprises an accumulator. The accumulator is in fluid communication with the oil contained in the first and in the second chamber. The first portion of the rod has a first diameter, and the second portion of the rod has a second diameter. According to an example, the second diameter is greater than the first diameter. For this reason, a force is generated at the piston which pushes the rod to move backwards, in the absence of other forces. This configuration allows the arms to be lifted more efficiently and prevents the guiding device from falling downwards due to the force of gravity. According to an example, the actuator comprises a connection conduit. The connection conduit allows the passage of oil between the first and the second chamber of the cylinder.

According to an example, the actuator includes a throttling valve. The throttling valve is positioned in the connection conduit.

The actuator may comprise a lifting valve. The lifting valve constitutes a passive unidirectional valve. The passive unidirectional valve is positioned in the connection conduit. The passive unidirectional valve is positioned in parallel with the throttling valve. According to an example, the oil can pass from the second chamber to the first chamber through the unidirectional valve. Moreover, according to an example, the oil is forced to pass through the throttling valve to pass from the first to the second chamber.

For this reason, according to an aspect of this invention, when the support structure rotates about the axis of oscillation forwards and consequently the guiding device moves towards the lowered position,
the rod and the piston move inside the cylinder, upwards, and therefore the rod is extended and at least a part of the oil is transferred from the first chamber to the second chamber. As explained above, the oil, when moving from the first chamber to the second chamber, passes firstly from the throttling valve; this solution guarantees a damping effect every time the guiding device is lowered. For this reason, it is possible to increase the robustness of the windrow merger.

According to an example, the actuator comprises a lowering valve. The lowering valve is positioned in the connection conduit. The lowering valve is configured to be moved between an open configuration and a blocking configuration. According to an example, in the open configuration, the oil can flow freely through the lowering valve. According to an example, in the blocking configuration, the lowering valve constitutes a unidirectional valve in such a way that the oil can only pass from the first chamber to the second chamber. For this reason, it is possible to prevent the guiding device from lifting towards the raised position, in the blocking configuration; while in the open configuration, the oil can move between the first and the second chamber and the guiding device can be moved downwards and upwards in two directions, as explained above.

According to an example, the actuator comprises a front volume. The front volume is defined inside the cylinder. The front volume includes the first and the second chamber. The actuator may comprise an inner flange. The inner flange is provided by the cylinder. The inner flange is positioned inside the cylinder.

According to an example, the actuator comprises a rear volume. The rear volume is defined inside the cylinder. According to an example, the rear volume is separated from the front volume by the inner flange.

According to an example, the actuator includes a slidable annular wall. The sliding annular wall is movable longitudinally in the rear volume. The sliding annular wall is with the inner flange to define a third chamber. The third chamber allows further oil in communication with an oil pressure source. The actuator includes a locking valve. The locking valve is configured for managing the flow of the further oil in and out of the third chamber. The locking valve is configured to be moved between a forward configuration, a backward configuration and a neutral configuration. In the forward configuration, the volume of the third chamber is reduced. Moreover, in the forward configuration the slidable annular wall moves towards the inner flange.

In the backward configuration, the volume of the third chamber is expanded. Moreover, in the backward configuration the slidable annular wall moves away from the inner flange.

In the neutral configuration, the position of the sliding annular wall is fixed.

The second portion of the rod has a front end and a rear end. According to an example, the front end of the second portion of the rod is connected to the piston. According to an example, the rear end of the second portion of the rod is positioned in the rear volume. Moreover, the slidable annular wall constitutes a stop element for the rear end of the second portion of the rod. The stop element (that is, the contact element) limits a forward movement of the rod.

This solution prevents the guiding device from moving downwards and fixing it at a predetermined height. This predetermined height is adjustable by moving the annular wall inside the rear volume, inserting oil inside the third chamber or removing oil from the third chamber.

According to an aspect of the invention, this invention provides a method for forming windrows through a windrow merger which picks up agricultural products from a field. The method comprises a step of moving the windrow merger in an advancing direction.

The method comprises a step for collecting agricultural products using a pick up device of the windrow merger.

The method comprises a step of moving agricultural products picked up, by means of a conveyor. The agricultural products picked up are moved by the conveyor, in a conveying direction. The conveying direction is oriented horizontally. The conveying direction is oriented transversely to the advancing direction.

The method comprises a step of preparing a guiding device. The guiding device is located upstream of the pick up device relative to the advancing direction. The guiding device is configured for guiding the agricultural products towards the conveyor. The guiding device is movable between a lowered position and a raised position. In the lowered position, the guiding device is proximal to the pick up device. In the raised position, the guiding device is distal from the pick up device.

The method comprises a step of supporting, in a movable fashion, the guiding device using a support structure. The support structure is articulated to a frame of the windrow merger, to rotate about an axis of oscillation. The axis of oscillation is parallel to the conveying direction.

The method comprises a step of preparing an actuating structure. The actuating structure comprises a rod. The rod extends parallel to the conveying direction. The rod is rotatably connected to the frame to rotate about an axis of rotation. The axis of rotation is parallel to the axis of oscillation. According to an example, the axis of rotation is positioned at a height greater than the axis of oscillation. According to another example, the axis of rotation may be located at the same height as the axis of oscillation.

The actuating structure includes levers. The bars connect the support structure to the rod.

The actuating structure includes an actuator. The actuator is connected to the frame. The actuator is connected to the rod.

According to an example, the movements of the guiding device between the lowered position and the raised position, by rotation of the support structure around the pivoting axis, are kinematically linked to a position of the actuator through the rotation of the rod around the rotation axis.

According to an example, the bars are articulated to linking elements. The connection elements are fixed at opposite ends of the rod. According to an example, the actuator includes a single piston-cylinder system. According to an example, the single piston-cylinder system is located at one of said ends of the rod.

According to an example, the actuator is a hydraulic system. The hydraulic system comprises a cylinder. The cylinder is tubular. The cylinder is oriented in a longitudinal direction.

The hydraulic system includes a piston. The piston defines inside the cylinder a first chamber and a second chamber. Pressurised oil moves between the first and the second chamber when the piston moves inside the cylinder.

The hydraulic system includes a rod. The rod has a first portion. The first portion is positioned partly in the first chamber and partly outside the cylinder. The rod has a second portion. The second portion is positioned at least partly in the second chamber. The first portion of the rod has a first diameter. The second portion of the rod has a second diameter. According to an example, the second diameter is greater than the first diameter, in such a way as to generate a force on the piston which pushes the rod to move backwards, in the absence of other forces.

The rod is connected to the piston.

When the guiding device moves towards the lowered position, the rod is extracted from the cylinder and oil is transferred from the first chamber to the second chamber. When the guiding device moves towards the raised position, the rod retracts into the cylinder and oil is transferred from the second chamber to the first chamber.

According to an example, the second chamber is in fluid communication with an accumulator. According to an example, the actuator comprises a connection conduit. The oil between the first and the second chamber of the cylinder passes through said connection conduit.

According to an example, the actuator includes a throttling valve. The throttling valve is positioned in the connection conduit. According to an example, the oil is forced to pass through the throttling valve when the guiding device is lowered and the oil moves from the first chamber to the second chamber.

According to an example, the actuator includes a lifting valve. According to an example, the oil passes through the lifting valve when the guiding device rises and the oil moves from the second chamber to the first chamber. Therefore, the lifting valve allows the passage of the oil only from the second chamber to the first chamber.

According to an example, the actuator comprises a lowering valve. The lowering valve is positioned in the connection conduit. The lowering valve has two operating configurations. Said two operating configurations include an open configuration and a blocking configuration.

According to an example, when the lowering valve is in the open configuration, the oil is free to flow through it between the first and the second chamber. Moreover, when the lowering valve is in the blocking configuration, the oil can pass through it only from the first chamber to the second chamber but not vice versa.

According to an example, the actuator comprises a front volume. The front volume is defined inside the cylinder. The front volume forms the first and the second chamber. The actuator may also include a rear volume. The rear volume is defined inside the cylinder. The rear volume is separated from the front volume by an inner flange.

The actuator includes a slidable annular wall. The sliding annular wall acts in conjunction with the inner flange to form, inside the rear volume, a third chamber. The sliding annular wall moves inside the rear volume in response to an entrance and exit of further oil to and from the rear volume. When the further oil enters the third chamber, the annular wall is pushed away from the inner flange. When the further oil leaves the third chamber, the annular wall moves towards the inner flange.

A front end of the second portion of the rod is connected to the piston. A rear end of the second portion of the rod is positioned in the rear volume. The sliding annular wall constitutes a contact element. The contact element limits a movement of extraction of the rod. It should be noted that the windrow merger can comprise one or more windrow merger modules according to this description.

This and other features will become more apparent from the following description of a preferred embodiment of the invention, illustrated by way of non-limiting example in the accompanying tables of drawings, in which:

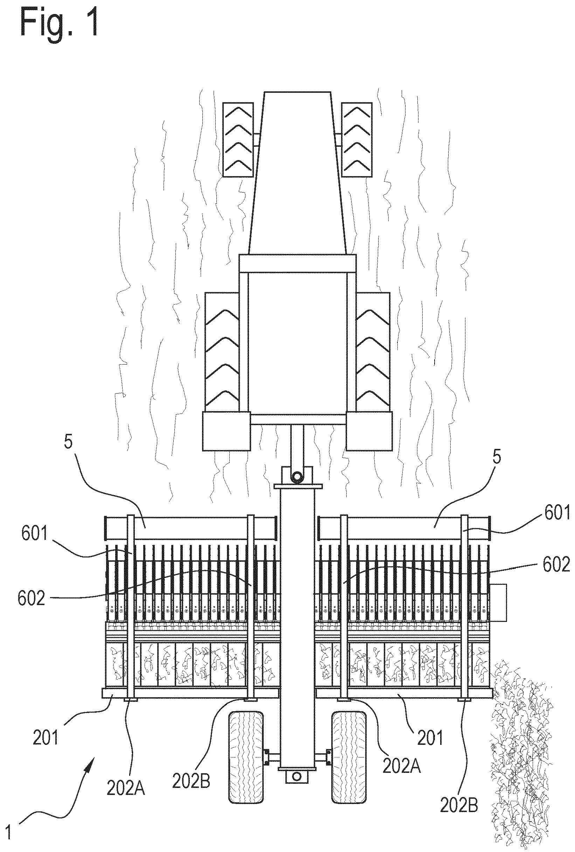

- Figure 1 is a plan view of a windrow merger, including two windrow merger modules according to the invention, connected to a tractor,

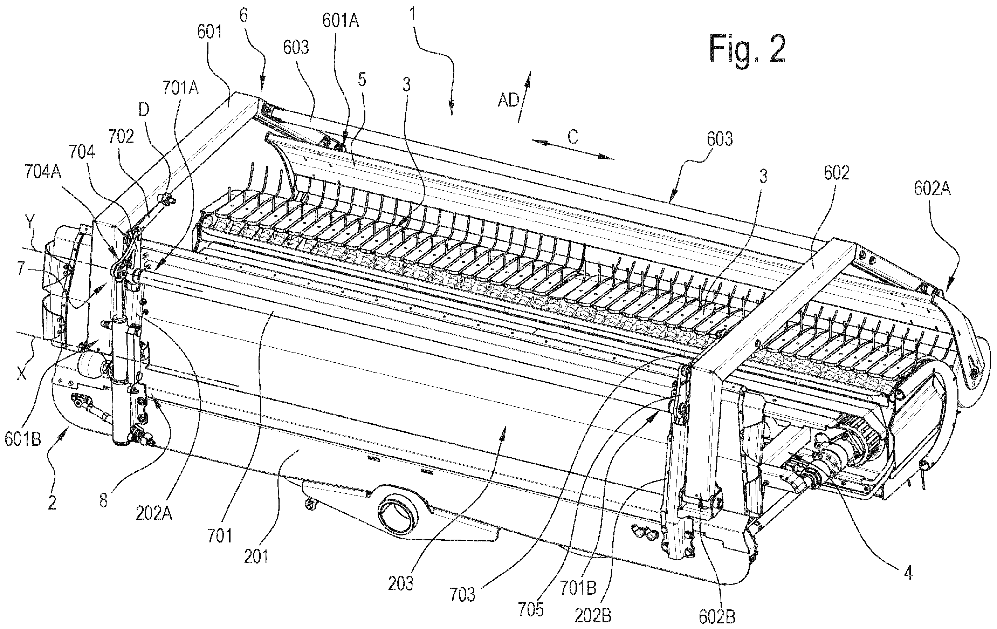

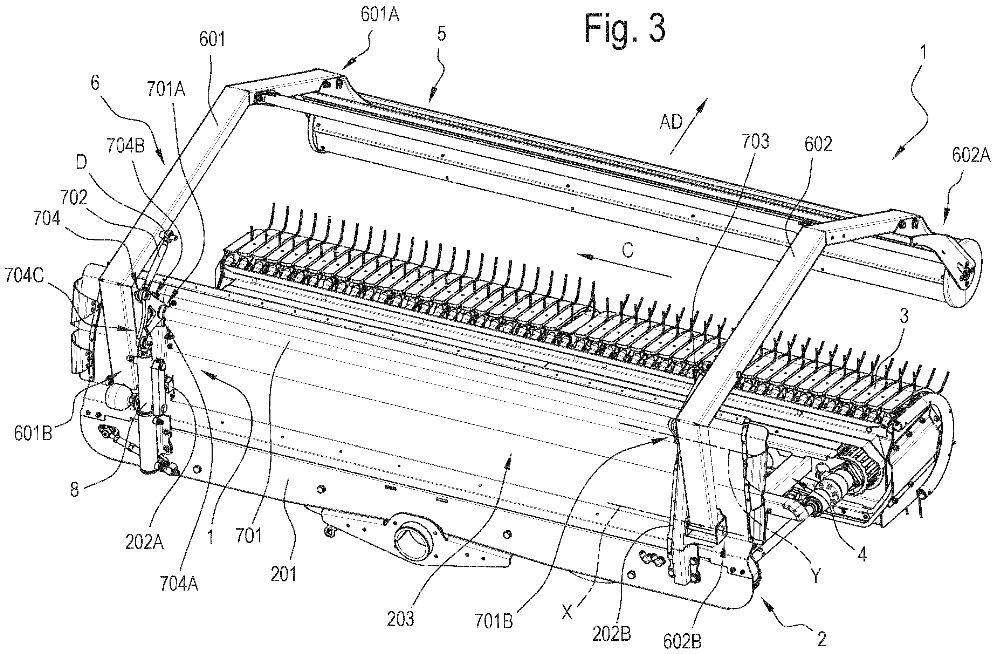

- Figures 2 and 3 illustrate a windrow merger module according to this invention according to a different angle, with the guiding device in the lowered and raised position;

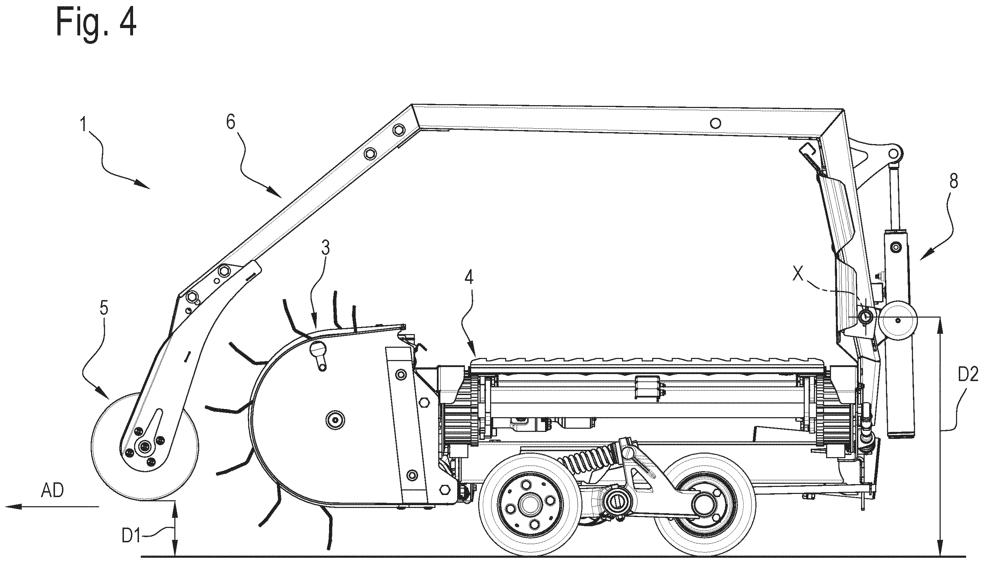

- Figure 4 is a side view of the windrow merger with the guiding device in the lowered position;

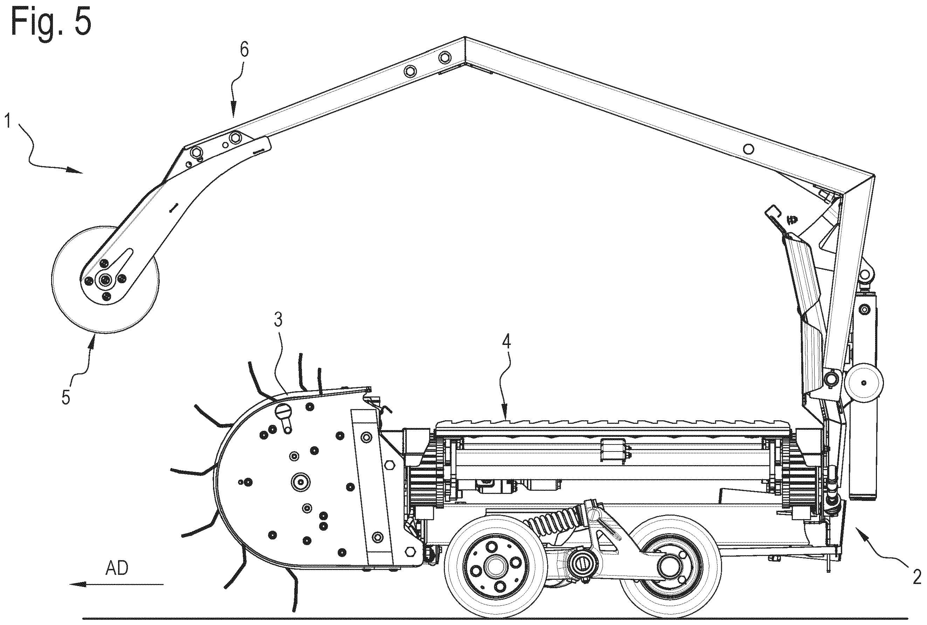

- Figure 5 is a side view of the windrow merger with the guiding device in the raised position;

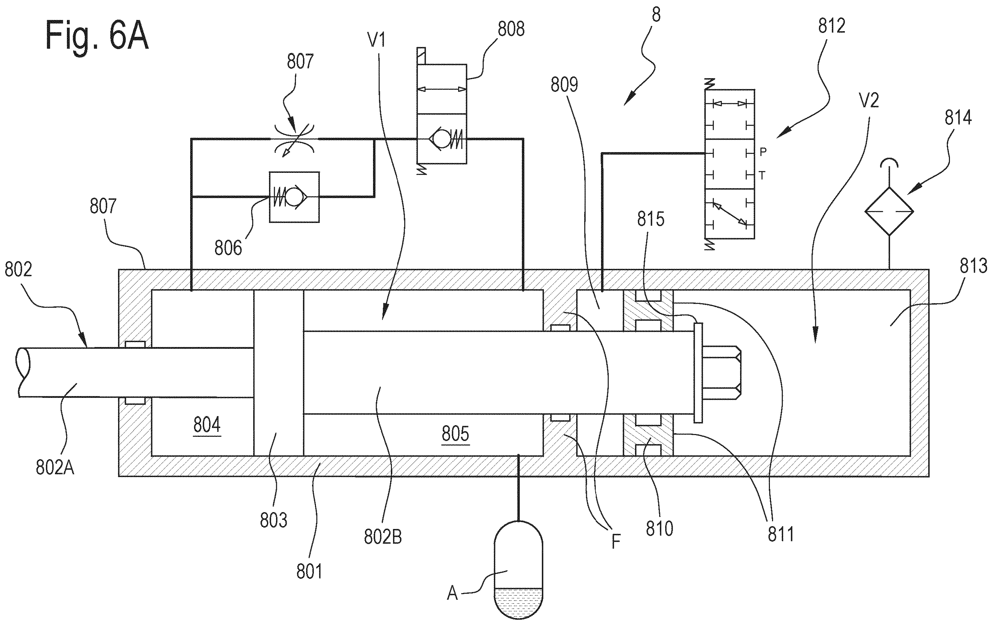

- Figure 6A illustrates the hydraulic system with the rod in the forward configuration;

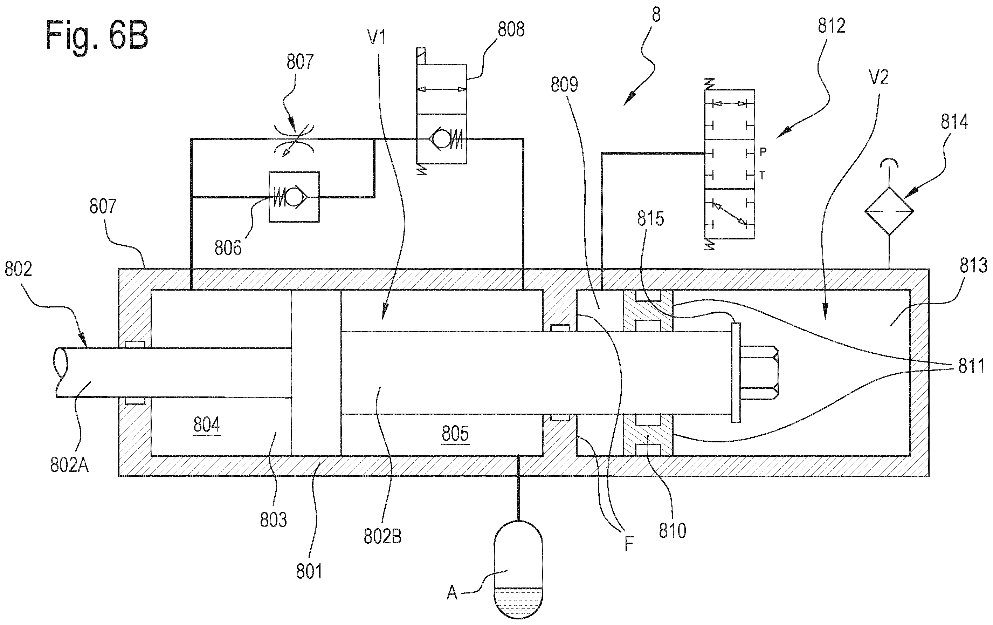

- Figure 6B illustrates the hydraulic system with the rod in the backward configuration;

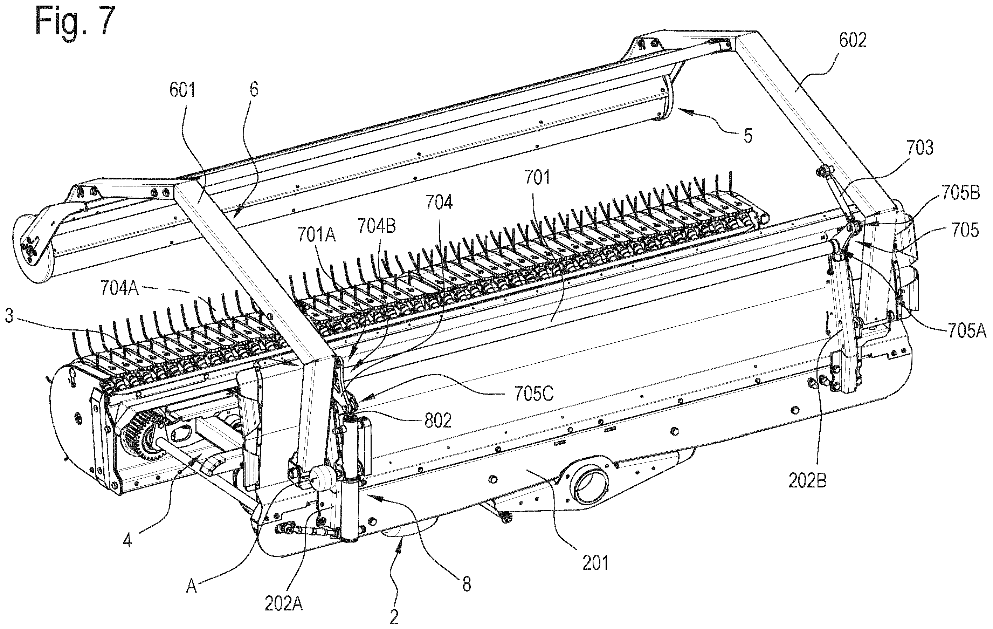

- Figures 7 illustrates the rear part of a windrow merger module;

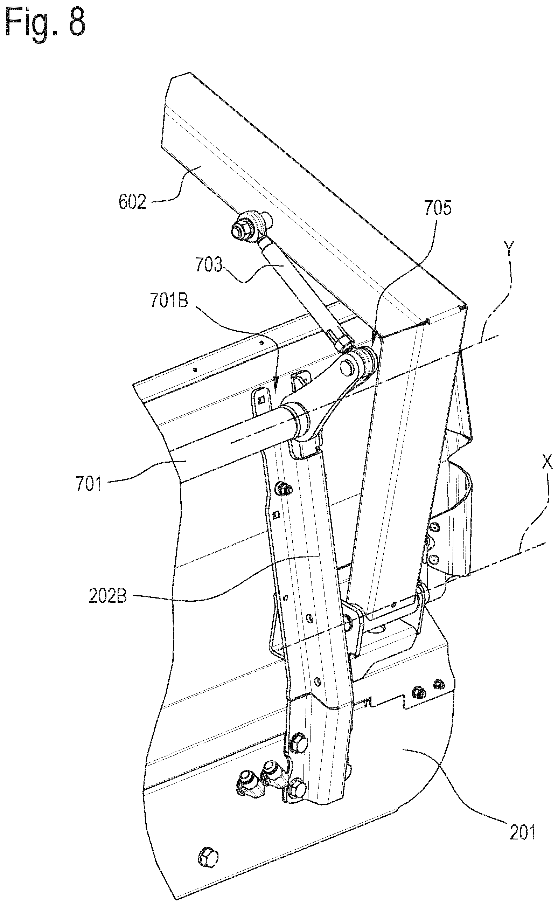

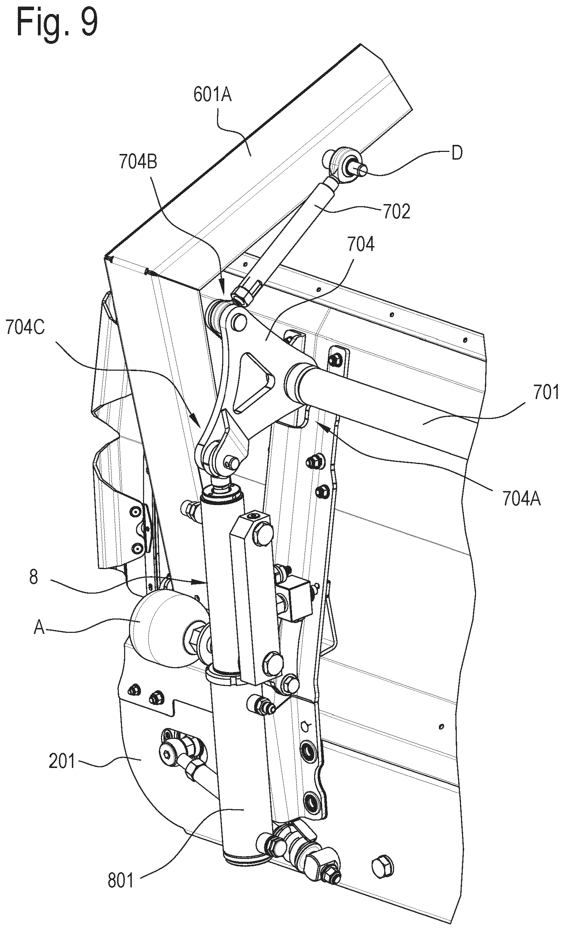

- Figures 8 and 9 illustrate further details of the first and second linking elements;

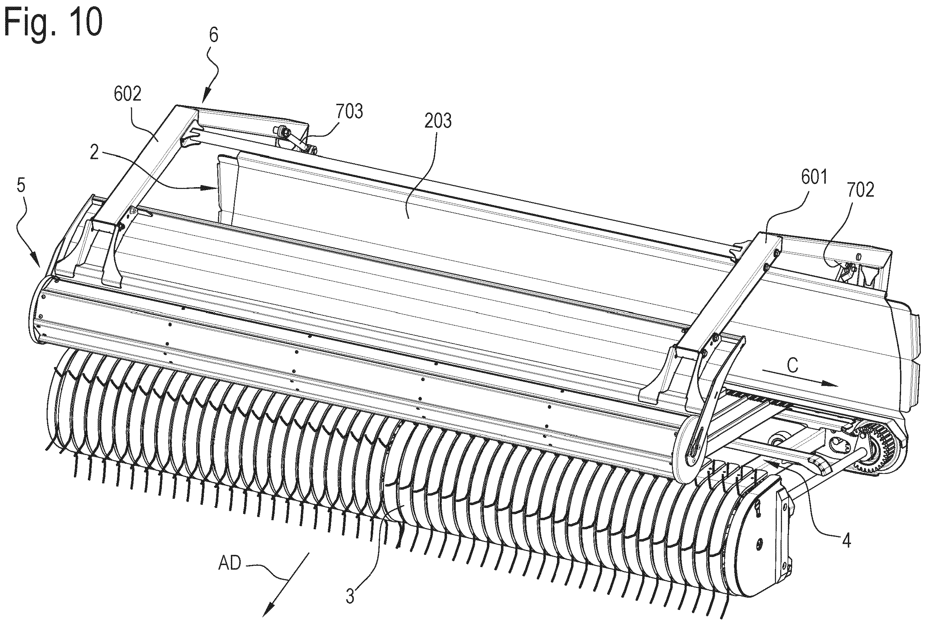

- Figure 10 illustrates the front part of a windrow merger module.

With reference to the accompanying drawings, the numeral 1 denotes a windrow merger. The windrow merger 1 is configured for collecting agricultural products from a field. The windrow merger 1 moves in an advancing direction AD. The windrow merger can include wheels. According to an example, the windrow merger 1 is pulled by another agricultural machine, for example a tractor, along the advancing direction AD. According to another example, the windrow merger 1 may be self-propelled to move along the advancing direction. The windrow merger includes a frame 2. The frame may comprise a crosspiece 201. The crosspiece 201 is oriented transversally to the advancing direction AD. The frame 2 may also comprise a first upright 202A and a second upright 202B. The first and the second upright are fixed to the crosspiece 201. The uprights protrude from the crosspiece 201 upwards.

The windrow merger 1 also includes a pick up device 3. The pick up device 3 picks up the agricultural products. The pick up device 3 may be a roller which rotates about an axis, in a direction opposite to the direction of rotation of the wheels of the windrow merger when it advances along said advancing direction. The windrow merger 1 also includes a conveyor 4. The conveyor 4 is connected to the frame 2. The conveyor receives the agricultural products from the pick up device and moves them in a conveying direction C. The conveying direction C is oriented horizontally and transversely to the advancing direction AD. The conveyor may be a conveyor belt.

The windrow merger 1 includes a guiding device 5. The guiding device is positioned upstream of the pick up device 3 relative to the advancing direction AD. In particular, the guiding device 5 guides the agricultural products towards the conveyor 4. The guiding device 5 is movable between a lowered position, proximal to the pick up device 3 and a raised position, distal from the pick up device 3. According to an example, the guiding device 3 is made of aluminium. According to an example, the guiding device 5 is in the form of a roller. According to an example, the windrow merger 1 includes a support structure 6, which supports the guiding device 5 in a movable fashion. The support structure comprises a first arm 601 and a second arm 601. Each arm has a first end 601A, 602A connected to the guiding device 5 and a second end articulated to the frame 2. In particular, the second end of each arm is articulated to a respective upright between the first and the second upright 202A, 202B. For this reason, the support structure rotates relative to the frame 2 about an axis of oscillation X. The axis of oscillation X is parallel to the conveying direction C. The axis of oscillation X is located upstream of the guiding device relative to the advancing direction AD. The axis of oscillation is located at a height above the ground. According to an example, the axis of oscillation X is positioned at a height greater than a lower end of the guiding device 5 in the lowered position. According to an example, the height of the axis of oscillation X relative to the ground D2 is between 700 and 800 mm. Preferably, the height of the axis of oscillation X relative to the ground is equal to 650 mm. The height of the lowest end of the guiding device in the lowered position D1 is between 160 and 240 mm. Preferably, the height of the lowest end of the guiding device in the lowered position D1 is equal to 200 mm.

According to an example, a ratio between the height of the axis of oscillation X relative to the ground D2 and the height of the lowest end of the guiding device in the lowered position D1 is less than or equal to 5. Preferably, the ratio between the height of the axis of oscillation X relative to the ground D2 and the height of the lowest end of the guiding device in the lowered position D1 is less than or equal to 4.

Moreover, according to an example, the frame 2 includes a support surface 203. The support surface extends from the crosspiece 201 upwards. According to an example, the uprights 202A, 202B are fixed to the crosspiece 201 at one end and to the support surface 203 at the other end. The support surface supports the weight of the arms. The support surface is foldable downwards and upwards in response to the rotation of the support structure about the axis of oscillation X. According to an example, the support structure includes a connection bar 603. The first and the second arm are connected to each other by the connection bar.

The windrow merger also includes an actuating structure 7. The actuating structure comprises a rod 701. The rod 701 extends parallel to the conveying direction between a first end 701A and a second end 702A and is rotatably connected to the first and to the second upright 202A, 202B at the first and the second end 701A, 702A, respectively, for rotating along an axis of rotation Y. The axis of rotation Y is parallel to the axis of oscillation X. Preferably, the axis of rotation Y is positioned at a height greater than (or equal to) the axis of oscillation X. For this reason, the first and the second arm 601, 602 are connected to each other by the rod 701.

The actuating structure 7 includes a first and a second bar 702, 703. The bars are connected, respectively, to the first and to the second arm 601, 602. Each of said first and second bars is connected to the respective arm at an actuating point D, located between the first and the second end of the arm 601A, 602A, 601B, 602B. Moreover, each bar is connected to the rod 701. A rotation of the rod 701 about the axis of rotation Y is kinematically linked to a rotation of the support structure 6 about the axis of oscillation X, by means of the first and the second bar 702, 703. In other words, each rotation of the rod 701 about the axis of rotation Y leads to the rotation of the support structure 6 about the axis of oscillation X, and vice versa.

The actuating structure includes an actuator 8. The actuator 8 is connected to the frame 2 and to the rod 701. A position of the actuator 8 is kinematically linked to an angular position of the rod about the axis of rotation Y. In other words, changing the position of the actuator 8 causes a rotation of the rod 701 about the axis of oscillation and vice versa.

According to an example, the actuator 8 is a hydraulic system. The hydraulic system comprises a cylinder 801, oriented in a longitudinal direction. The cylinder 801 is tubular.

The hydraulic system also comprises a piston 803, positioned inside the cylinder 801. The piston is movable inside the cylinder 801 and defines a first chamber 804 and a second chamber 805, inside the cylinder. The volume of each of the chambers 804, 805 changes in response to the movement of the piston inside the cylinder. The first and the second chamber are filled with oil under pressure. The first and second chamber are in fluid communication and the oil can move between the first and the second chamber in response to a movement of the piston inside the cylinder. Moreover, the hydraulic system includes an accumulator A. The accumulator A is in fluid communication with the oil in the first and in the second chamber. Preferably, the accumulator A is connected to the second chamber 805. For this reason, when the oil is transferred from the first chamber to the second chamber, a part of the oil is contained by the accumulator. The accumulator keeps the oil under pressure. The accumulator is configured to contain more or less oil depending on the pressure of the oil itself; for example, the accumulator forms a chamber for the oil separated from a chamber containing a pressurised gas, the chamber of the oil and the chamber of the gas being separated by a movable partition, which is positioned in such a way as to establish a equilibrium pressure between the oil and the gas. According to an example, the accumulator A is a membrane-type accumulator (the membrane may be replaced by a rigid sliding wall). In particular, a membrane is used in the membrane-type accumulator to divide the fluid side (where the oil in this case is accumulated) and the gas side of the accumulator. The hydraulic system (consisting of the first chamber, the second chamber and the accumulator) is a closed system.

The hydraulic system includes a rod 802, movable in the cylinder 801. The rod has a first portion 802A, positioned partly in the first chamber and partly outside the cylinder, and a second portion 802B positioned at least partly in the second chamber 805. According to an example, a diameter of the first portion 802 of the rod is less than the diameter of the second portion of the rod; for this reason, a force is generated on the piston which pushes the rod to move backwards, in the absence of other forces. In other words, the diameter of the first part of the rod which is partly inside the first chamber is greater than the diameter of the second portion of the rod which is partly inside the second chamber, so, in the first chamber 804 there is a force greater; the accumulator A, connected to the second chamber, guarantees the existence of the greater force inside. This difference helps to lighten the support structure and creates a pulling force which helps to lift the arms. The rod 801 is connected to the piston 803.

The rod 801 connects said position of the actuator to the angular position of the rod about the axis of rotation. In other words, when the guiding device moves towards the lowered position, the rod moves out of the cylinder 801 and at least a part of the oil is transferred from the first chamber to the second chamber, and, when the guiding device moves towards the raised position, the rod withdraws into the cylinder and at least a part of the oil is transferred from the second chamber to the first chamber.

In particular, the rod 801 moves with an extraction movement wherein the rod extends outside the cylinder 801 and the guiding device 5 moves towards the lowered position, and a retraction movement, wherein the rod 802 withdraws into the cylinder 801 and the guiding device is moved towards the raised position. The rod is configured to move along the tube of the cylinder for adjusting a height of the guiding device 5 relative to the ground between the lowered position and the raised position.

According to an example, the actuator 8 comprises a connection conduit which allows the passage of the oil between the first and the second chamber 804, 805 of the cylinder 801.

The actuator 8 includes a throttling valve 807 located in the connection conduit, and a lifting valve 806 which constitutes a passive unidirectional valve positioned in the connection conduit in parallel with the throttling valve 807. In particular, the oil can pass only from the second chamber to the first chamber through the unidirectional valve 806 and is forced to pass through the throttling valve 807 to pass from the first chamber to the second chamber.

The actuator 8 may also include a lowering valve 808. The lowering valve is a solenoid valve. The lowering valve is positioned in the connection conduit, and can have two different operating configurations. in an open configuration, the oil can flow freely through the lowering valve between the first and second chambers, and in a blocking configuration, the lowering valve constitutes a unidirectional valve through which the oil can pass only from the first chamber to the second chamber. For this reason, in the blocking configuration of the solenoid valve, the rod is blocked downwards and can no longer be raised.

According to an example, the actuator 8 comprises a front volume V1 and a rear volume. The inner volume is inside the cylinder 801, and forms the first and the second chamber 804, 805.

The rear volume V2 is inside the cylinder 801 and separated from the front volume V1 by an inner flange F. For this reason, oil of the front volume does not enter the volume of the rear volume.

The actuator includes a sliding annular wall 810. The annular wall is movable longitudinally in the rear volume V2. According to an example, the annular wall 810 acts in conjunction with the inner flange F to form a third chamber 809 inside the rear volume V2. The third chamber is connected to a source of oil pressure to receive additional oil. The rear volume V2 also includes a fourth chamber 813. The fourth chamber is separated from the third chamber by the annular wall 810. The fourth chamber is filled with air. The rear volume V2 includes a vent 814 (that is, a vent valve).

The actuator includes a locking valve 812 for managing the flow of the further oil in and out from the third chamber. The locking valve can have three different operating configurations.

In a forward configuration, the volume of the third chamber 809 is reduced and the sliding annular wall 810 approaches the inner flange F.

In a backward configuration, the volume of the third chamber 809 is expanded and the sliding annular wall moves away from the inner flange F. In a neutral configuration, the position of the sliding annular wall is fixed. In the backward configuration, the sliding annular wall moves away from the inner flange F and the volume of the fourth chamber 813 is reduced; in this configuration, the air exits the fourth chamber through said vent 814.

For this reason, the sliding annular wall moves within the rear volume in response to an entrance and exit of further oil to and from the rear volume, wherein as further oil enters the third chamber, the annular wall 810 is pushed away from the inner flange F, and as further oil exits the third chamber, the annular wall moves towards the inner flange.

The second portion 802B of the rod 802 has a front end which is connected to the piston 803 and a rear end positioned in the rear volume V2. The slidable annular wall constitutes a stop element 811 which limits the movement of extraction of the rod.

In particular, the sliding annular part forms the stop element 811 which blocks a protrusion 815 of the rear end of the rod and limits the extraction movement of the rod.

It should be noted that the actuator 8 may have a passive part and an active part. As explained above, according to an example, the oil can pass freely between the first and the second chamber; in this example, the front volume of the actuator allows the guiding device to move upwards and downwards between the lowered position and the raised position; it should be noted that in the downward movement the movement of the guiding device is dampened by means of the throttling valve. Moreover, a minimum height above ground is guaranteed for the guiding device by means of the contact element. Moreover, it is possible to adjust the minimum height completely lifting the arms, and consequently the guiding device, by moving the contact element, inserting further oil in the third chamber. For this reason, according to this example, the rear volume V2 is an active actuator. Moreover, it is possible to fix the guiding device in a predetermined position, using the lowering valve in the blocking configuration to prevent the guiding device from lifting and by means of the contact element to prevent the forward movement (extraction movement) of the rod and consequently the forward movement (downwards) of the guiding device.

For this reason, the actuating structure 7 may operate in conjunction with the support structure 6 for supporting the guiding device in a relative operating position and for allowing it to have movement upwards and downwards and to move it upwards. During the operation of the windrow merger, the rod 801 slides forwards and backwards with respect to the sliding annular wall 810 which remains in a fixed position inside the rear volume V2. For this reason, during the operation, the guiding device can move upwards and downwards and the damping during the downward movement is guaranteed by the throttling valve, whilst the minimum height of the guiding device in the lowered position D1 is determined by the position of the contact element which remains fixed inside the rear volume during operation of the windrow merger. During the operation, the guiding device is held in the lowered position.

Moreover, during transport, the guiding device must be raised.

According to an example, the actuating structure 7 also comprises a first linking element 704 and a second linking element 705. Each linking element has a first portion 704A, 705A fixed to the rod 701 and a second portion 704B, 705B articulated, respectively, to the first and to the second bar. The second portion is radially spaced from the axis of rotation Y. The first linking element 704 further includes a third portion 704C, articulated to the actuator 8, and radially spaced from the rotation axis Y.

Preferably, the third portion 704C is angularly spaced from the second portion 704B, by a predetermined angle greater than zero.

For this reason, according to an example embodiment, the first and the second portion of the linking elements provide an arm between each other which connects the rod to the levers. Moreover, according to an example, the first and the third portion of the first linking element form a further arm between each other for connecting the actuator to the rod. Moreover, the third and the second portion of the first linking element are connected together. For this reason, according to an example, the first linking element can be triangular in shape and connects the actuator to the rod and to the first bar.

According to an example, the actuator comprises a single piston-cylinder system. According to an example, the actuator is located at the first end of the rod.

## Claims

1. A windrow merger (1) for collecting agricultural products from a field in an advancing direction (AD), comprising:
- a frame (2), having a crosspiece (201) oriented transversal to the advancing direction (AD), and a first and a second upright (202A,202B) fixed to the crosspiece (201) to project upwards;
- a pick up device (3) for picking up the agricultural products;
- a conveyor (4), connected to the frame (2) and configured to receive the agricultural products from the pick up device (3) and moving them in a conveying direction (C), oriented horizontally and transversal to the advancing direction (AD);
- a guiding device (5), placed upstream of the pick-up device (3) with respect to the advancing direction (AD) and configured for guiding the agricultural products towards the conveyor (4), wherein the guiding device (5) is movable between a lowered position, proximal to the pick-up device (3), and a raised position, distal from the pick-up device (3);
- a support structure (6), for movably supporting the guiding device (5), the support structure including a first arm (601) and a second arm (602), each having a first end (601A,602A) connected to the guiding device (5) and a second end (601B,602B) articulated to the frame (2), so that the support structure (6) is pivotable with respect to the frame (2) around a pivoting axis (X) parallel to the conveying direction (C);
- an actuating structure (7), **characterized in that** the actuating structure includes
a rod (701) extending parallel to the conveying direction (C) between a first end (701A) a second end (701B) and rotatably connected to the first and second uprights (202A,202B), at the first and second end (701A,702A), respectively, to rotate along a rotation axis (Y), the rotation axis (Y) being parallel to the pivoting axis (X),
a first bar (702) and a second of bar (703) connected to the first arm (601) and the second arm (602), respectively, each of said first and second bar (702,703) being connected to the respective arm (601,602) at a driving point (D), located between the first and the second end of the arm (601A,602A,601B,602B), and being connected to the rod (701), so that a rotation of the rod (701) around the rotation axis (Y) is kinematically linked to a rotation of the support structure (6) around the pivoting axis (X), through the first and the second bar (702,703);
an actuator (8), connected to the frame and to the rod (701) so that a position of the actuator (8) is kinematically linked to the angular position of the rod around the rotation axis (Y).

2. The windrow merger (1) according to claim 1, wherein the actuating structure (7) further comprises a first linking element (704) and a second linking element (705) having a first portion (704A,705A) fixed to the rod (701) and a second portion (704B,705B) articulated to the first and the second bar, respectively, the second portion being radially spaced from the rotation axis (Y).

3. The windrow merger (1) according to claim 2, wherein the first linking element (704) further includes a third portion (704C), articulated to the actuator, and radially spaced from the rotation axis (Y).

4. The windrow merger (1) according to claim 3, wherein either or both of the following conditions is met:
i) the third portion (704C) is angularly spaced from the second portion (704B), by a predetermined angle greater than zero;
ii) the actuator includes a single piston-cylinder system located at the first end of the rod (701).

5. The windrow merger (1) according to any of the previous claims, wherein the actuator (8) is a hydraulic system and includes
a cylinder tube (801), oriented in a longitudinal direction;
a piston (803), positioned inside the cylinder tube to define a first chamber (804) and a second chamber (805) filled with oil under pressure, the first and second chambers being in fluid communication, so that the oil can move between the first and the second chamber responsive to a movement of the piston within the cylinder tube,
a shaft (802), movable in the cylinder tube (801) to kinematically link said position of the actuator to the angular position of the rod around the rotation axis (Y) and connected to the piston (803), the shaft (802) having a first portion (802A), positioned partly in the first chamber and partly outside the cylinder, and a second portion (802B) positioned at least partly in the second chamber,
an accumulator (A) in fluid communication with the oil contained in the first and in the second chamber.

6. The windrow merger (1) according to claim 5, wherein the first portion of the shaft has a first diameter, and the second portion of the shaft has a second diameter, the second diameter being greater than the first diameter, so that a force is generated on the piston that biases the shaft to move backwards, in the absence of other forces.

7. The windrow merger (1) according to claim 5 or 6, wherein the actuator (8) includes:
- a connection conduit for allowing a passage of oil between the first and the second chamber of the cylinder tube;
- a throttling valve (807) positioned in the connection conduit;
- a lifting valve (806) providing a passive unidirectional valve positioned in the connection conduit in parallel to the throttling valve (807), so that the oil is allowed to move from the second chamber to the first chamber through the unidirectional valve (806) and is forced to pass through the throttling valve (807) for moving from the first to the second chamber.

8. The windrow merger (1) according to any of the claims from 5 to 7, wherein the actuator (8) includes:
- a connection conduit for allowing a passage of oil between the first and the second chamber of the cylinder tube;
- a lowering valve (808), positioned in the connection conduit, and configured to be moved between an open configuration, wherein the oil can freely flow therethrough, and a blocking configuration, wherein it provides a unidirectional valve so that the oil is allowed to move only from the first chamber to the second chamber.

9. The windrow merger according to any of the previous claims from 5 to 8, wherein the actuator (8) includes:
- a front volume (V1), defined inside the cylinder tube, the front volume providing the first and the second chambers;
- an inner flange (F) provided by the cylinder tube;
- a rear volume (V2), defined inside the cylinder tube and separated from the front volume by the inner flange;
- a sliding annular wall (810), movable longitudinally in the rear volume and cooperating with the inner flange to define a third chamber (809), inside the rear volume (V2), the third chamber (809) containing further oil in communication with an oil pressure source;
- a locking valve (812), for managing the flow of the further oil in and out from the third chamber and configured to be moved among
a forward configuration, wherein the volume of the third chamber (809) is reduced and the sliding annular wall approaches the inner flange,
a backward configuration, wherein the volume of the third chamber (809) is expanded and the sliding annular wall moves away from the inner flange, and
a neutral configuration, wherein the position of the sliding annular wall is fixed,
wherein the second portion (802B) of the shaft (802) has a front end connected to the piston and rear end positioned in the rear volume, the sliding annular wall (810) providing a stop member (811) for the rear end of the second portion (802B) of the shaft (802), so to limit a forward movement of the shaft.

10. The windrow merger (1) according to any of the previous claims, wherein the guiding device (5), in the lowered position, is at a fist quote (D1) from the ground, the pivoting axis (X) being located at a second quote (D2) from the ground, a ratio between the second quote (D2) and the first quote (D1) being less than 4.

11. A method for forming windrows through a windrow merger (1) which collects agricultural products from a field, comprising the following steps:
- moving the windrow merger in an advancing direction (AD);
- picking up the agricultural products through a pickup device (3) of the windrow merger (1);
- moving the picked up agricultural products through a conveyor (104) in a conveying direction (C), oriented horizontally and transversal to the advancing direction (AD);
- providing a guiding device (5) placed upstream of the pick-up device (3) with respect to the advancing direction, for guiding the agricultural products towards the conveyor (4), the guiding device (5) being movable between a lowered position, proximal to the pick-up device (3), and a raised position, distal from the pick-up device (3);
- movably supporting the guiding device (5) by means of a support structure (6) articulated to a frame (2) of the windrow merger (1), to pivot around a pivoting axis (X) parallel to the conveying direction (C);
- providing an actuating structure (7), **characterized in that** the actuating structure includes
a rod (701) extending parallel to the conveying direction (C) and rotatably connected to the frame (2) to rotate about a rotation axis (Y), the rotation axis (Y) being parallel to the pivoting axis (X),
bars (702,703) for connecting the support structure (6) to the rod (701),
an actuator (8), connected to the frame and to the rod (701), so that the movements of the guiding device (5) between the lower position and the upper position, by rotation of the support structure (6) around the pivoting axis (X), are kinematically linked to a position of the actuator (8) through the rotation of the rod (701) around the rotation axis (Y).

12. The method according to claim 11, wherein the bars (702,703) are articulated to linking elements (704,705) fixed to opposite ends of the rod (701), the actuator comprising a single piston-cylinder system, placed at one of said ends of the rod ends (701).

13. The method according to claim 11 or 12, wherein the actuator (8) is a hydraulic system, and comprises
a cylinder tube (801), oriented in a longitudinal direction;
a piston (803), which defines within the cylinder tube a first chamber (804) and a second chamber (805), in which oil under pressure moves between the first and second chambers when the piston moves inside the cylinder tube,
a shaft (802), having a first portion (802A), positioned partly in the first chamber and partly outside the cylinder, and a second portion (802B) positioned at least partially in the second chamber, wherein the first portion of the shaft has a first diameter, and the second portion of the shaft has a second diameter, the second diameter being greater than the first diameter, so as to generate a force to the piston which pushes the shaft to move backwards, in the absence of other forces, in which the shaft is connected to the piston,
wherein, as the guiding device moves towards the lowered position, the shaft moves out of the cylinder (801) and a transfer of oil from the first chamber to the second chamber occurs, and, as the guiding device moves towards the raised position, the shaft retracts into the cylinder and a transfer of oil occurs from the second chamber to the first chamber, the second chamber being in fluid communication with an accumulator (A).

14. The method according to claim 13, wherein one or more of the following conditions are met:
i) the actuator (8) comprises:
- a connection conduit through which the oil passes between the first and second chambers of the cylinder tube;
- a throttling valve (807) placed in the connection conduit, through which the oil is forced to pass when the guiding device is lowered and the oil moves from the first chamber to the second chamber;
- a lifting valve (806), through which the oil passes when the guiding device is lifted and the oil moves from the second chamber to the first chamber, wherein the lifting valve allows the oil to pass only from the second chamber to first chamber;
ii) the actuator (8) comprises:
- a connection conduit through which the oil passes between the first and second chambers of the cylinder tube;
- a lowering valve (808), positioned in connection conduit, and having two operating configurations, an open configuration, and a blocking configuration,
so that when the lowering valve is in the open configuration, the oil is free to flow through it between the first and second chambers and, when the lowering valve is in the block configuration, the oil can pass through it only from the first chamber to the second chamber but not vice versa.

15. The method according to any one of claims 13 to 14, wherein the actuator (8) comprises:
- a front volume (V1), defined inside the cylinder, the front volume forming the first and second chambers;
- a rear volume (V2), defined inside the cylinder and separated from the front volume by an inner flange (F);
- a sliding annular wall (810), cooperating with the inner flange to define, within the rear volume, a third chamber (809), wherein the sliding annular wall moves within the rear volume in response to an entrance and exit of further oil to and from the rear volume, wherein as further oil enters the third chamber, the annular wall is pushed away from the inner flange (F), and as further oil exits the third chamber, the annular wall moves towards the inner flange,
wherein a front end of the second portion (802B) of the shaft (802) is connected to the piston and a rear end of the second portion (802B) of the shaft is positioned in the rear volume, and wherein the sliding annular wall forms a stop member (811) which limits a forward movement of the shaft.

## Patentansprüche

1. Schwader (1) zum Sammeln von landwirtschaftlichen Produkten aus einem Feld in einer Vorschubrichtung (Ad), umfassend:
- einen Rahmen (2), der ein Querstück (201) aufweist, das quer zur Vorschubrichtung (AD) ausgerichtet ist, und einen ersten und einen zweiten Pfosten (202A, 202B), die am Querstück (201) fixiert sind, um nach oben zu ragen;
- eine Aufnahmevorrichtung (3) zum Aufnehmen der landwirtschaftlichen Produkte;
- einen Förderer (4), an mit dem Rahmen (2) verbunden und ausgelegt ist, um die landwirtschaftlichen Produkte von der Aufnahmevorrichtung (3) zu erhalten und sie in eine Förderrichtung (C) horizontal ausgerichtet und quer zur Vorschubrichtung (AD) zu bewegen;
- eine Führungsvorrichtung (5), die stromaufwärts der Aufnahmevorrichtung (3) in Bezug auf die Vorschubrichtung (AD) platziert und ausgelegt ist, um die landwirtschaftlichen Produkte hinführend zum Förderer (4) zu führen, wobei die Führungsvorrichtung (5) zwischen einer abgesenkten Position in der Nähe der Aufnahmevorrichtung (3) und einer angehobenen Position entfernt von der Aufnahmevorrichtung (3) bewegbar ist;
- eine Tragestruktur (6) zum bewegbaren Tragen der Führungsvorrichtung (5), wobei die Tragestruktur einen ersten Arm (601) und einen zweiten Arm (602) einschließt, wobei ein jeder davon ein erstes Ende (601A, 602A), das mit der Führungsvorrichtung (5) verbunden ist, und ein zweites Ende (601B, 602B), das gelenkig am Rahmen (2) befestigt ist, aufweist, sodass die Tragestruktur (6) in Bezug auf den Rahmen (2) rund um eine Schwenkachse (X) parallel zur Förderrichtung (C) schwenkbar ist;
- eine Betätigungsstruktur (7), **dadurch gekennzeichnet, dass** die Betätigungsstruktur Folgendes einschließt:
eine Stange (701), die sich parallel zur Förderrichtung (C) zwischen einem ersten Ende (701A), einem zweiten Ende (701B) und drehbar verbunden mit dem ersten und dem zweiten Pfosten (202A, 202B) jeweils am ersten und weiten Ende (701A, 702A) erstreckt, um sich entlang einer Rotationsachse (Y) zu drehen, wobei die Rotationsachse (Y) parallel zur Schwenkachse (X) verläuft;
einen ersten Stab (702) und einen zweiten Stab (703), die jeweils mit dem ersten Arm (601) und dem zweiten Arm (602) verbunden sind, wobei sowohl der erste als auch der zweite Stab (702,703) mit dem jeweiligen Arm (601,602) an einem Lenkungspunkt (D) verbunden sind, der zwischen dem ersten und dem zweiten Ende des Arms (601A,602A,601B,602B) befindlich und mit der Stange (701) verbunden ist, sodass eine Drehung der Stange (701) rund um die Rotationsachse (Y) kinematisch mit einer Drehung der Tragestruktur (6) rund um die Schwenkachse (X) durch den ersten und den zweiten Stab (702, 703) gekoppelt ist;
einen Aktuator (8), der mit dem Rahmen und der Stange (701) verbunden ist, sodass eine Position des Aktuators (8) kinematisch mit der winkeligen Position der Stange rund um die Rotationsachse (Y) gekoppelt ist.

2. Schwader (1) nach Anspruch 1, wobei die Betätigungsstruktur (7) zudem ein erstes Kopplungselement (704) und ein zweites Kopplungselement (705), aufweisend einen ersten Abschnitt (704A, 705A), der an der Stange (701) fixiert ist, und einen zweiten Abschnitt (704B, 705B), der jeweils gelenkig am ersten und am zweiten Stab befestigt ist, wobei der zweite Abschnitt radial von der Rotationsachse (Y) beabstandet ist.

3. Schwader (1) nach Anspruch 2, wobei das erste Kopplungselement (704) zudem einen dritten Abschnitt (704C) einschließt, der gelenkig am Aktuator befestigt und radial von der Rotationsachse (Y) beabstandet ist.

4. Schwader (1) nach Anspruch 3, wobei entweder eine oder beide der folgenden Bedingungen erfüllt ist/sind:
i) Der dritte Abschnitt (704C) ist durch einen vorbestimmten Winkel größer als null winkelig vom zweiten Abschnitt (704B) beabstandet;
ii) Der Aktuator schließt ein Einzelkolbenzylindersystem ein, das am ersten Ende der Stange (701) befindlich ist.

5. Schwader (1) nach einem der vorhergehenden Ansprüche, wobei der Aktuator (8) ein Hydrauliksystem ist und Folgendes einschließt:
ein Zylinderrohr (801), das in einer Längsrichtung ausgerichtet ist;
einen Kolben (803), der im Zylinderrohr positioniert ist, um eine erste Kammer (804) und eine zweite Kammer (805) zu definieren, die mit Öl unter Druck gefüllt sind, wobei die erste und die zweite Kammer in Fluidkommunikation sind, sodass das Öl sich als Reaktion auf eine Bewegung des Kolbens im Zylinderrohr zwischen der ersten und der zweiten Kammer bewegen kann;
eine Welle (802), die im Zylinderrohr (801) bewegbar ist, um die Position des Aktuators zur winkeligen Position der Stange rund um die Rotationsachse (Y) und verbunden mit dem Kolben (803) kinematisch zu koppeln, wobei die Welle (802) einen ersten Abschnitt (802A) aufweist, der teilweise in der ersten Kammer und teilweise außerhalb des Zylinders positioniert ist, und einen zweiten Abschnitt (802B), der mindestens teilweise in der zweiten Kammer positioniert ist;
einen Akkumulator (A) in Fluidkommunikation mit dem in der ersten und in der zweiten Kammer enthaltenen Öl.

6. Schwader (1) nach Anspruch 5, wobei der erste Abschnitt der Welle einen ersten Durchmesser aufweist und der zweite Abschnitt der Welle einen zweiten Durchmesser aufweist und der zweite Durchmesser größer ist als der erste Durchmesser, sodass eine Kraft auf den Kolben erzeugt wird, die die Welle in Ermangelung anderer Kräfte führt, sodass sie sich rückwärts bewegt.

7. Schwader (1) nach Anspruch 5 oder 6, wobei der Aktuator (8) Folgendes einschließt:
- eine Verbindungsleitung, um ein Durchströmen von Öl zwischen der ersten und der zweiten Kammer des Zylinderrohrs zu erlauben;
- ein Drosselventil (807), das in der Verbindungsleitung positioniert ist;
- ein Hebeventil (806), das ein passives unidirektionales Ventil bereitstellt, das in der Verbindungsleitung parallel zum Drosselventil (807) positioniert ist, sodass das Öl sich durch das unidirektionale Ventil (806) von der zweiten Kammer zur ersten Kammer bewegen kann und gezwungen ist, durch das Drosselventil (807) zu strömen, um sich von der ersten zur zweiten Kammer zu bewegen.

8. Schwader (1) nach einem der Ansprüche 5 bis 7, wobei der Aktuator (8) Folgendes einschließt:
- eine Verbindungsleitung, um ein Durchströmen von Öl zwischen der ersten und der zweiten Kammer des Zylinderrohrs zu erlauben;
- ein Absenkventil (808), das in der Verbindungsleitung positioniert und ausgelegt ist, um zwischen einer offenen Auslegung, in der das Öl frei dadurch strömen kann, und einer Sperrauslegung, in der es ein unidirektionales Ventil bereitstellt, sodass das Öl sich nur von der ersten Kammer zur zweiten Kammer bewegen kann, bewegt zu werden.

9. Schwader nach einem der vorhergehenden Ansprüche 5 bis 8, wobei der Aktuator (8) Folgendes einschließt:
- ein vorderes Volumen (V1), das innerhalb des Zylinderrohrs definiert ist, wobei das vordere Volumen die erste und die zweite Kammer bereitstellt;
- einen inneren Flansch (F), der durch das Zylinderrohr bereitgestellt ist;
- ein hinteres Volumen (V2), das innerhalb des Zylinderrohrs definiert und durch den inneren Flansch vom vorderen Volumen getrennt ist;
- eine ringförmige Schiebewand (810), die längs im hinteren Volumen bewegbar ist und mit dem inneren Flansch kooperiert, um deine dritte Kammer (809) innerhalb des hinteren Volumens (V2) zu definieren, wobei die dritte Kammer (809) weiteres Öl in Kommunikation mit einer Öldruckquelle enthält;
- ein Verriegelungsventil (812), um den Strom des weiteren Öls in die und aus der dritten Kammer zu handhaben, und das ausgelegt ist, um zwischen
einer Vorwärtsauslegung, in der das Volumen der dritten Kammer (809) reduziert wird und die ringförmige Schiebewand sich dem inneren Flansch nähert,
einer Rückwärtsauslegung, in der das Volumen der dritten Kammer (809) ausgedehnt wird und sich die ringförmige Schiebewand wegführend vom inneren Flansch bewegt, und einer neutralen Auslegung, in der die Position der ringförmigen Schiebewand fix ist, bewegt zu werden,
wobei der zweite Abschnitt (802B) der Welle (802) ein vorderes Ende aufweist, das mit dem Kolben verbunden ist, und ein hinteres Ende, das im hinteren Volumen positioniert ist, wobei die ringförmige Schiebewand (810) ein Stoppelement (811) für das hintere Ende des zweiten Abschnitts (802B) der Welle (802) bereitstellt, sodass eine Vorwärtsbewegung der Welle begrenzt wird.

10. Schwader (1) nach einem der vorhergehenden Ansprüche, wobei sich die Führungsvorrichtung (5) in der abgesenkten Position an einem ersten Maß (D1) vom Boden befindet, die Schwenkachse (X) an einem zweiten Maß (D2) vom Boden befindlich ist und ein Verhältnis zwischen dem ersten Maß (D2) und dem zweiten Maß (D1) kleiner als 4 ist.

11. Verfahren zum Bilden von Schwaden durch einen Schwader (1), der landwirtschaftliche Produkte von einem Feld sammelt, umfassend die folgenden Schritte:
- Bewegen des Schwaders in eine Vorschubrichtung (AD);
- Aufnehmen der landwirtschaftlichen Produkte durch eine Aufnahmevorrichtung (3) des Schwaders (1);
- Bewegen der aufgenommenen landwirtschaftlichen Produkte durch einen Förderer (104) in eine Förderrichtung (C), horizontal ausgerichtet und quer zur Vorschubrichtung (AD);
- Bereitstellen einer Führungsvorrichtung (5), die stromaufwärts der Aufnahmevorrichtung (3) in Bezug auf die Vorschubrichtung platziert ist, um die landwirtschaftlichen Produkte hinführend zum Förderer (4) zu führen, wobei die Führungsvorrichtung (5) zwischen einer abgesenkten Position in der Nähe der Aufnahmevorrichtung (3) und einer angehobenen Position entfernt von der Aufnahmevorrichtung (3) bewegbar ist;
- bewegbares Tragen der Führungsvorrichtung (5) durch eine Tragestruktur (6), die gelenkig an einem Rahmen (2) des Schwaders (1) befestigt ist, um sich rund um eine Schwenkachse (X) parallel zur Förderrichtung (C) zu schwenken;
- Bereitstellen einer Betätigungsstruktur (7), **dadurch gekennzeichnet, dass** die Betätigungsstruktur Folgendes einschließt:
eine Stange (701), die sich parallel zur Förderrichtung (C) erstreckt und drehbar mit dem Rahmen (2) verbunden ist, um sich um eine Rotationsachse (Y) zu drehen, wobei die Rotationsachse (Y) parallel zur Schwenkachse (X) verläuft;
Stäbe (702, 703), um die Tragestruktur (6) mit der Stange (701) zu verbinden;
einen Aktuator (8), der mit dem Rahmen und der Stange (701) verbunden ist,
sodass die Bewegungen der Führungsvorrichtung (5) zwischen der unteren Position und der oberen Position durch Drehung der Tragestruktur (6) rund um die Schwenkachse (X) kinematisch mit einer Position des Aktuators (8) durch die Drehung der Stange (701) rund um die Rotationsachse (X) gekoppelt sind.

12. Verfahren nach Anspruch 11, wobei die Stäbe (702, 703) gelenkig an Kopplungselementen (704, 705) befestigt sind, die an entgegengesetzten Enden der Stange (701) fixiert sind, wobei der Aktuator ein Einzelkolbenzylindersystem umfasst, das an einem der Enden der Stangenenden (701) platziert ist.

13. Verfahren nach Anspruch 11 oder 12, wobei der Aktuator (8) ein Hydrauliksystem ist und Folgendes umfasst:
ein Zylinderrohr (801), das in einer Längsrichtung ausgerichtet ist;
einen Kolben (803), der innerhalb des Zylinderrohrs eine erste Kammer (804) und eine zweite Kammer (805) definiert, in dem sich Öl unter Druck zwischen der ersten und der zweiten Kammer bewegt, wenn sich der Kolben innerhalb des Zylinderrohrs bewegt;
eine Welle (802), aufweisend einen ersten Abschnitt (802A), der teilweise in der ersten Kammer und teilweise außerhalb des Zylinders positioniert ist, und einen zweiten Abschnitt (802B), der zumindest teilweise in der zweiten Kammer positioniert ist, wobei der erste Abschnitt der Welle einen ersten Durchmesser aufweist und der zweite Abschnitt der Welle einen zweiten Durchmesser aufweist und der zweite Durchmesser größer ist als der erste Durchmesser, sodass eine Kraft auf den Kolben erzeugt wird, die die Welle in Ermangelung anderer Kräfte drückt, sodass sie sich rückwärts bewegt, wobei die Welle mit dem Kolben verbunden ist,
wobei sich die Welle aus dem Zylinder (801) heraus bewegt, wenn sich die Führungsvorrichtung hinführend zur abgesenkten Position bewegt, und ein Transfer von Öl von der ersten Kammer zur zweiten Kammer erfolgt, und die Welle in den Zylinder einfährt, wenn sich die Führungsvorrichtung hinführend zur angehobenen Position bewegt, und ein Transfer von Öl von der ersten Kammer zur zweiten Kammer erfolgt, wobei die zweite Kammer mit einem Antrieb (A) in Fluidkommunikation ist.

14. Verfahren nach Anspruch 13, wobei eine oder mehrere der folgenden Bedingungen erfüllt ist/sind:
i) Der Aktuator (8) umfasst Folgendes:
- eine Verbindungsleitung, durch die das Öl zwischen der ersten und der zweiten Kammer des Zylinderrohrs strömt;
- ein Drosselventil (807), das in der Verbindungsleitung platziert ist, durch die das Öl gezwungen wird zu strömen, wenn die Führungsvorrichtung abgesenkt wird und das Öl sich von der ersten Kammer zur zweiten Kammer bewegt;
- eine Hebeventil (806), durch das das Öl strömt, wenn die Führungsvorrichtung angehoben wird und sich das Öl von der zweiten Kammer zur ersten Kammer bewegt, wobei das Hebeventil dem Öl erlaubt, nur von der zweiten Kammer zur ersten Kammer zu strömen;
ii) Der Aktuator (8) umfasst Folgendes:
- eine Verbindungsleitung, durch die das Öl zwischen der ersten und der zweiten Kammer des Zylinderrohrs strömt;
- ein Senkventil (808), das in der Verbindungsleitung positioniert ist und zwei Betriebsauslegungen, eine offene Auslegung und eine Sperrauslegung, aufweist,
sodass das Öl, wenn sich das Senkventil in der offenen Auslegung befindet, frei durch es zwischen der ersten und der zweiten Kammer strömen kann, und das Öl, wenn sich das Senkventil in der Sperrauslegung befindet, durch es nur von der ersten Kammer zur zweiten, aber nicht umgekehrt strömen kann.

15. Verfahren nach einem der Ansprüche 13 bis 14, wobei der Aktuator (8) Folgendes umfasst:
- ein vorderes Volumen (V1), das innerhalb des Zylinders definiert ist, wobei das vordere Volumen die erste und die zweite Kammer bildet;
- ein hinteres Volumen (V2), das innerhalb des Zylinders definiert und durch einen inneren Flansch (F) vom vorderen Volumen getrennt ist;
- eine ringförmige Schiebewand (810), die mit dem inneren Flansch kooperiert, um innerhalb des hinteren Volumens eine dritte Kammer (809) zu definieren, wobei sich die ringförmige Schiebewand innerhalb des hinteren Volumens als Reaktion auf ein Einströmen und Ausströmen von weiterem Öl in das und aus dem hinteren Volumen bewegt, wobei die ringförmige Wand, wenn weiteres Öl in die dritte Kammer einströmt, wegführend vom inneren Flansch (F) gedrückt wird, und die ringförmige Wand sich hinführend zum inneren Flansch bewegt, wenn weiteres Öl aus der dritten Kammer ausströmt,
wobei ein vorderes Ende des zweiten Abschnitts (802B) der Welle (802) mit dem Kolben verbunden ist und ein hinteres Ende des zweiten Abschnitts (802B) der Welle im hinteren Volumen positioniert ist, und wobei die ringförmige Schiebewand ein Stoppelement (811) bildet, das eine Vorwärtsbewegung der Welle begrenzt.

## Revendications

1. Dispositif de fusion d'andain (1) pour collecter des produits agricoles à partir d'un champ dans une direction d'avancement (AD), comprenant :
- un cadre (2), ayant une traverse (201) orientée transversalement à la direction d'avancement (AD), et un premier et un second montant (202A,202B) fixés à la traverse (201) pour faire saillie vers le haut ;
- un dispositif de ramassage (3) pour ramasser les produits agricoles ;
- un convoyeur (4), connecté au cadre (2) et configuré pour recevoir les produits agricoles du dispositif de ramassage (3) et les déplacer dans une direction de transport (C), orientée horizontalement et transversalement à la direction d'avancement (AD) ;
- un dispositif de guidage (5), placé en amont du dispositif de ramassage (3) par rapport à la direction d'avancement (AD) et configuré pour guider les produits agricoles vers le convoyeur (4), où le dispositif de guidage (5) est mobile entre une position abaissée, proximale au dispositif de ramassage (3), et une position relevée, distale du dispositif de ramassage (3) ;
- une structure de support (6), pour supporter de manière mobile le dispositif de guidage (5), la structure de support incluant un premier bras (601) et un second bras (602), chacun ayant une première extrémité (601A,602A) connectée au dispositif de guidage (5) et une seconde extrémité (601B,602B) articulée au cadre (2), de sorte que la structure de support (6) peut pivoter par rapport au cadre (2) autour d'un axe de pivotement (X) parallèle à la direction de transport (C) ;
- une structure d'actionnement (7), **caractérisé en ce que** la structure d'actionnement inclut
une tige (701) s'étendant parallèlement à la direction de transport (C) entre une première extrémité (701A) et une seconde extrémité (701B) et connectée de manière rotative aux premier et second montants (202A, 202B), au niveau de la première et à la seconde extrémité (701A, 702A), respectivement, pour tourner le long d'un axe de rotation (Y), l'axe de rotation (Y) étant parallèle à l'axe de pivotement (X),
une première barre (702) et une seconde barre (703) connectées au premier bras (601) et au second bras (602), respectivement, chacune desdites première et seconde barres (702,703) étant connectée au bras respectif (601,602) au niveau d'un point d'entraînement (D), situé entre la première et la seconde extrémité du bras (601A,602A,601B,602B), et étant connectée à la tige (701), de sorte qu'une rotation de la tige (701) autour de l'axe de rotation (Y) est cinématiquement liée à une rotation de la structure de support (6) autour de l'axe de pivotement (X), par l'intermédiaire de la première et de la seconde barre (702,703) ;
un actionneur (8), connecté au cadre et à la tige (701) de sorte qu'une position de l'actionneur (8) est liée cinématiquement à la position angulaire de la tige autour de l'axe de rotation (Y).

2. Dispositif de fusion d'andain (1) selon la revendication 1, dans lequel la structure d'actionnement (7) comprend également un premier élément de liaison (704) et un second élément de liaison (705) ayant une première portion (704A, 705A) fixée à la tige (701) et une deuxième portion (704B, 705B) articulée à la première et à la seconde barre, respectivement, la deuxième portion étant radialement espacée de l'axe de rotation (Y).

3. Dispositif de fusion d'andain (1) selon la revendication 2, dans lequel le premier élément de liaison (704) inclut également une troisième portion (704C), articulée à l'actionneur, et radialement espacée de l'axe de rotation (Y).

4. Dispositif de fusion d'andain (1) selon la revendication 3, dans lequel l'une ou les deux conditions suivantes sont satisfaite :
i) la troisième portion (704C) est espacée angulairement de la deuxième portion (704B), d'un angle prédéterminé supérieur à zéro ;
ii) l'actionneur inclut un système piston-cylindre unique situé au niveau de la première extrémité de la tige (701).

5. Dispositif de fusion d'andain (1) selon l'une quelconque des revendications précédentes, dans lequel l'actionneur (8) est un système hydraulique et inclut
un tube de cylindre (801), orienté dans une direction longitudinale ;
un piston (803), positionné à l'intérieur du tube de cylindre pour définir une première chambre (804) et une seconde chambre (805) remplies d'huile sous pression, les première et deuxième chambres étant en communication fluidique, de sorte que l'huile peut se déplacer entre la première et la deuxième chambre en réponse à un mouvement du piston à l'intérieur du tube de cylindre, un arbre (802), mobile dans le tube de cylindre (801) pour relier cinématiquement ladite position de l'actionneur dans la position angulaire de la tige autour de l'axe dedans rotation (Y) et connecté au piston (803), l'arbre (802) ayant une première portion (802A), positionnée partiellement dans la première chambre et partiellement à l'extérieur du cylindre, et une seconde portion (802B) positionnée au moins partiellement dans la seconde chambre,
un accumulateur (A) en communication fluidique avec l'huile contenue dans la première et dans la seconde chambre.

6. Dispositif de fusion d'andain (1) selon la revendication 5, dans lequel la première portion de l'arbre a un premier diamètre, et la seconde portion de l'arbre a un second diamètre, le second diamètre étant supérieur au premier diamètre, de sorte qu'une force est générée sur le piston qui sollicite l'arbre à se déplacer vers l'arrière, en l'absence d'autres forces.

7. Dispositif de fusion d'andain (1) selon la revendication 5 ou 6, dans lequel l'actionneur (8) inclut :
- un conduit de connexion pour permettre un passage d'huile entre la première et la deuxième chambre du tube de cylindre ;
- une vanne d'étranglement (807) positionnée dans le conduit de connexion ;
- une vanne de levage (806) fournissant une vanne unidirectionnelle passive positionnée dans le conduit de connexion en parallèle à la vanne d'étranglement (807), de sorte que l'huile est autorisée à se déplacer de la deuxième chambre à la première chambre à travers la vanne unidirectionnelle (806) et est forcée à passer à travers la vanne d'étranglement (807) pour se déplacer de la première à la deuxième chambre.

8. Dispositif de fusion d'andain (1) selon l'une quelconque des revendications 5 à 7, dans lequel l'actionneur (8) inclut :
- un conduit de connexion pour permettre un passage d'huile entre la première et la deuxième chambre du tube de cylindre ;
- une vanne d'abaissement (808), positionnée dans le conduit de connexion, et configurée pour être déplacée entre une configuration ouverte, dans laquelle l'huile peut s'écouler librement à travers elle, et une configuration de blocage, dans laquelle elle fournit une vanne unidirectionnelle de sorte que l'huile ne peut se déplacer que de la première chambre à la seconde chambre.

9. Dispositif de fusion d'andain selon l'une quelconque des revendications précédentes 5 à 8, dans lequel l'actionneur (8) inclut :
- un volume avant (V1), défini à l'intérieur du tube de cylindre, le volume avant fournissant les première et deuxième chambres ;
- une bride intérieure (F) fournie par le tube de cylindre ;
- un volume arrière (V2), défini à l'intérieur du tube de cylindre et séparé du volume avant par la bride intérieure ;
- une paroi annulaire coulissante (810), mobile longitudinalement dans le volume arrière et coopérant avec la bride intérieure pour définir une troisième chambre (809), à l'intérieur du volume arrière (V2), la troisième chambre (809) contenant de l'huile supplémentaire en communication avec une source de pression d'huile ;
- une vanne de blocage (812), pour gérer l'écoulement de l'huile supplémentaire entrant et sortant de la troisième chambre et configurée pour être déplacée entre une configuration avant, dans laquelle le volume de la troisième chambre (809) est réduit et la paroi annulaire coulissante s'approche de la bride intérieure,
une configuration vers l'arrière, dans laquelle le volume de la troisième chambre (809) est dilaté et la paroi annulaire coulissante s'éloigne de la bride intérieure, et
une configuration neutre, dans laquelle la position de la paroi annulaire coulissante est fixe,
dans lequel la seconde portion (802B) de l'arbre (802) a une extrémité avant connectée au piston et une extrémité arrière positionnée dans le volume arrière, la paroi annulaire coulissante (810) fournissant un élément de butée (811) pour l'extrémité arrière de la seconde portion (802B) de l'arbre (802), afin de limiter un mouvement vers l'avant de l'arbre.

10. Dispositif de fusion d'andain (1) selon l'une quelconque des revendications précédentes, dans lequel le dispositif de guidage (5), dans la position abaissée, est à une première cote (D1) du sol, l'axe de pivotement (X) étant situé à une seconde cote (D2) du sol, un rapport entre la seconde cote (D2) et la première cote (D1) étant inférieur à 4.

11. Procédé de formation d'andains à travers un dispositif de fusion d'andain (1) collectant des produits agricoles à partir d'un champ, comprenant les étapes suivantes :
- déplacer le dispositif de fusion d'andain dans une direction d'avancement (AD) ;
- ramasser les produits agricoles à travers un dispositif de ramassage (3) du dispositif de fusion d'andain (1) ;
- déplacer les produits agricoles ramassés à travers un convoyeur (104) dans une direction de transport (C), orientée horizontalement et transversalement à la direction d'avancement (AD) ;
- prévoir un dispositif de guidage (5) placé en amont du dispositif de ramassage (3) par rapport à la direction d'avancement, pour guider les produits agricoles vers le convoyeur (4), le dispositif de guidage (5) étant mobile entre une position abaissée, proximale au dispositif de ramassage (3), et une position relevée, distale du dispositif de ramassage (3) ;
- soutenir de manière mobile le dispositif de guidage (5) au moyen d'une structure de support (6) articulée à un cadre (2) du dispositif de fusion d'andain (1), pour pivoter autour d'un axe de pivotement (X) parallèle à la direction de transport (C) ;
- prévoir une structure d'actionnement (7), **caractérisée en ce que** la structure d'actionnement inclut
une tige (701) s'étendant parallèlement à la direction de transport (C) et connectée de manière rotative au cadre (2) pour tourner autour d'un axe de rotation (Y), l'axe de rotation (Y) étant parallèle à l'axe de pivotement (X),
des barres (702, 703) pour connecter la structure de support (6) à la tige (701),
un actionneur (8), connecté au cadre et à la tige (701), de sorte que les mouvements du dispositif de guidage (5) entre la position inférieure et la position supérieure, par rotation de la structure de support (6) autour de l'axe de pivotement (X), sont cinématiquement liés à une position de l'actionneur (8) à travers la rotation de la tige (701) autour de l'axe de rotation (Y).

12. Procédé selon la revendication 11, dans lequel les barres (702, 703) sont articulées à des éléments de liaison (704, 705) fixés aux extrémités opposées de la tige (701), l'actionneur comprenant un système piston-cylindre unique, placé à l'une desdites extrémités des extrémités de la tige (701).

13. Procédé selon la revendication 11 ou 12, dans lequel l'actionneur (8) est un système hydraulique, et comprend un tube de cylindre (801), orienté dans une direction longitudinale ;
un piston (803), qui définit à l'intérieur du tube de cylindre une première chambre (804) et une deuxième chambre (805), où l'huile sous pression se déplace entre les première et deuxième chambres lorsque le piston se déplace à l'intérieur du tube de cylindre,
un arbre (802), ayant une première portion (802A), positionnée partiellement dans la première chambre et partiellement à l'extérieur du cylindre, et une seconde portion (802B) positionnée au moins partiellement dans la deuxième chambre, où la première portion de l'arbre a un premier diamètre, et la seconde portion de l'arbre a un second diamètre, le second diamètre étant supérieur au premier diamètre, de manière à générer une force sur le piston qui pousse l'arbre à reculer, en l'absence d'autres forces, dans lequel l'arbre est connecté au piston,
où, lorsque le dispositif de guidage se déplace vers la position abaissée, l'arbre se déplace hors du cylindre (801) et un transfert d'huile de la première chambre vers la deuxième chambre se produit, et où, lorsque le dispositif de guidage se déplace vers la position relevée, l'arbre se rétracte dans le cylindre et un transfert d'huile se produit de la deuxième chambre vers la première chambre, la deuxième chambre étant en communication fluidique avec un accumulateur (A).

14. Procédé selon la revendication 13, dans lequel une ou plusieurs des conditions suivantes sont satisfaites :
i) l'actionneur (8) comprend :
- un conduit de connexion par lequel l'huile passe entre les première et deuxième chambres du tube de cylindre ;
- une vanne d'étranglement (807) placée dans le conduit de raccordement, à travers laquelle l'huile est forcée de passer lorsque le dispositif de guidage est abaissé et que l'huile se déplace de la première chambre à la deuxième chambre ;
- une vanne de levage (806), à travers laquelle l'huile passe lorsque le dispositif de guidage est soulevé et que l'huile se déplace de la deuxième chambre à la première chambre, où la vanne de levage permet à l'huile de passer uniquement de la deuxième chambre à la première chambre ;
ii) l'actionneur (8) comprend :
- un conduit de connexion par lequel l'huile passe entre les première et deuxième chambres du tube de cylindre ;
- une vanne d'abaissement (808), positionnée dans le conduit de connexion, et ayant deux configurations de fonctionnement, une configuration ouverte, et une configuration de blocage,
de sorte que lorsque la vanne d'abaissement est dans la configuration ouverte, l'huile est libre de s'écouler à travers elle entre les première et deuxième chambres et, lorsque la vanne d'abaissement est dans la configuration de blocage, l'huile peut la traverser uniquement de la première chambre à la deuxième chambre, mais pas vice versa.

15. Procédé selon l'une quelconque des revendications 13 à 14, dans lequel l'actionneur (8) comprend :
- un volume avant (V1), défini à l'intérieur du cylindre, le volume avant formant les première et deuxième chambres ;
- un volume arrière (V2), défini à l'intérieur du cylindre et séparé du volume avant par une bride intérieure (F) ;
- une paroi annulaire coulissante (810), coopérant avec la bride intérieure pour définir, à l'intérieur du volume arrière, une troisième chambre (809), dans laquelle la paroi annulaire coulissante se déplace à l'intérieur du volume arrière en réponse à une entrée et à une sortie d'huile supplémentaire vers et depuis le volume arrière, où, lorsque de l'huile supplémentaire entre dans la troisième chambre, la paroi annulaire est repoussée de la bride intérieure (F), et lorsque de l'huile supplémentaire sort de la troisième chambre, la paroi annulaire se déplace vers la bride intérieure,
où une extrémité avant de la seconde portion (802B) de l'arbre (802) est connectée au piston et une extrémité arrière de la seconde portion (802B) de l'arbre est positionnée dans le volume arrière, et où la paroi annulaire coulissante forme un élément de butée (811) qui limite un mouvement vers l'avant de l'arbre.
